# EUROPEAN PATENT APPLICATION

(11) **EP 0 622 529 A2**
(43) Date of publication of application: **02.11.1994**
(21) Application number: 94303023.9
(22) Date of filing: 27.04.1994
(51) Int. Cl.: F01N 3/02, F28G 9/00

(54) **Heat exchanger for internal combustion engines**

(30) Priority: 29.04.1993 GB 9308915
(71) Applicant: Allan, Thomas, Hove, East Sussex BN3 4FH (GB)
(72) Inventor: Allan, Thomas, Hove, East Sussex BN3 4FH (GB)
(74) Representative: Davies, Christopher Robert

(57) **Abstract**

In an exhaust gas manifold and heat exchanger unit (2) for mounting on an internal combustion engine (1), the outlet (13) of the manifold (3) may be closed off from the inlet of the exchanger (4) to allow in situ cleaning of the exchanger (4). The manifold (3) may be removably attached to the exchanger (4) to allow them to be moved apart at their interface to allow the insertion of a blanking plate (19) (see Fig. 2) between the manifold outlet (13) and the exchanger inlet.

## Description

The present invention relates to heat exchangers for internal combustion engines, and particularly, but not exclusively, to heat exchangers for diesel engines.

In hazardous situations, such as underground or on oil rigs, the use of internal combustion engines is strictly regulated, and they must operate to various standards, for example British Standards and the prevailing codes of practice. These standards set maximum limits on exhaust gas temperatures in dependence on the environment in which the engines are operated and on the gases present. Accordingly, the exhaust gases are typically cooled by being passed through a water-cooled exhaust gas heat exchanger before being vented to atmosphere. This may reduce the exhaust gas temperature of a diesel engine, for example, from 600°C to 200°C or less.

To add such a heat exchanger to an engine, it is standard practice to bolt an integral exhaust gas manifold/heat exchanger unit directly onto the engine in place of the engine's normal exhaust manifold, and to link the unit's cooling system with that of the engine, whilst upgrading the engine radiator to cope with the added demand.

The unit may comprise an exchanger of any standard design and be water jacketed. It may have additional attachments, such as a flame arrestor on its gas outlet.

A problem with these units is the complex procedure involved in cleaning those portions of the exchanger through which the exhaust gases pass, to remove, for example, carbon deposits.

To clean such a unit, the cooling systems of both the engine and unit must be drained, and most of the unit's cooling pipes disconnected. Lifting equipment must be brought in to take the weight of the unit, which may be as much as 300 kg, the unit must be unbolted from the engine, and any other supports or brackets holding it in place must be removed. The unit must then be taken away to a suitable cleaning site. After blanking all ports, the unit is then filled with a cleaning fluid through its gas outlet, and left to stand and soak for a set time before being flushed out.

Often, it is necessary to send the unit to a specialist cleaner, which means having to ship the unit ashore in the case of oil rig use, and reverse operations must, of course, be carried out to reinstall the unit, once cleaned.

Thus, cleaning maintenance of such a unit is a difficult and time-consuming exercise, requiring a number of workers and a long down-time in engine operation, which is expensive. Further, these drawbacks can lead to a reluctance to regularly service the unit, so that the unit will often not be running at maximum efficiency, which may not only reduce performance, but safety as well. This reluctance can also make cleaning of the unit, when undertaken, much more difficult, as large quantities of deposit may build up between services.

The present invention aims to overcome these problems and provides a method of cleaning an exhaust gas heat exchanger of an internal combustion engine, comprising the steps of closing off the exhaust gas manifold from the exhaust gas heat exchanger, and cleaning the exchanger, both steps being carried out whilst the manifold and exchanger are mounted on the engine.

The invention also provides an exhaust manifold and heat exchanger unit adapted to be mounted on an internal combustion engine which is suitable for use in such an in situ cleaning method. In one preferred form means are specifically provided for enabling the exhaust manifold and heat exchanger portions of the unit to be closed off from one another whilst the unit is mounted on the engine. In a further form, the manifold and exchanger are movable apart at their interface. This then allows an operator to, for example, place one or more blanking plates between the manifold outlet(s) and exchanger inlet(s).

The invention greatly reduces the complexity of the cleaning operation, and allows for rapid and efficient cleaning of the unit. The closing-off of the manifold from the heat exchanger prevents any cleaning fluid from entering the engine cylinders during the cleaning process, and the cleaning itself can be undertaken in a number of ways, such as by filling the exchanger with cleaning fluid through its exhaust gas outlet, and letting the exchanger soak (other methods are mentioned below). Suitable means may be provided accordingly to enable this cleaning to take place. For example, if the unit is soaked, these means may comprise drain means, such as a valve outlet towards the bottom of the exchanger for draining the cleaning fluid from the exchanger after soaking.

As the unit does not need to be removed from the engine, there is no need to drain the cooling system, nor to move any attachments from the unit or bring in lifting gear. A single individual may carry out the cleaning, and there is minimal engine down-time.

As cleaning is so quick and simple, it may be carried out on a more regular basis than has been usual, without interrupting engine operation to any significant extent. Thus, the unit can be kept running at its optimum efficiency, and in a safer manner. Also, the cleaning will be quickened further over the prior procedures, as less deposit will build up between each service.

The manifold and exchanger portions of the unit may be connected to one another and closed off from one another in any suitable manner. The manifold could connect each engine exhaust port individually to the exchanger, which would require that each connection be closed off on cleaning. Alternatively, outlets of the manifold could communicate with more than one manifold inlet to reduce the number of closing off points. Preferably, the manifold has only a single gas outlet which communicates with a single heat exchanger gas inlet, so that the manifold may be closed off from the exchanger at a single point.

Any suitable means may be provided for closing off the manifold from the exchanger, such as a gate or other valve. Preferably, however, the unit is adapted to allow the insertion of a blanking plate at the closing off point, as this provides a particularly inexpensive and simple system.

Preferably, and in marked contrast to prior art integral constructions, the manifold and exchanger are movable apart at their interface, by, for example, being removably attached to each other, for example by bolts or other fastening means. A blanking plate may then be inserted between the or each manifold outlet and exchanger inlet by slightly loosening the fastening means and (perhaps brackets or other supports for the unit), and by moving the manifold away from the exchanger by a short distance, for example, about 5 mm. The blanking plate or plates may then be slid into position and held in place by re-tightening the fastening means. This system, especially where a single manifold outlet is used, enables the manifold to be blocked off quickly and easily.

The blanking plate may be T-shaped so that the arm portions of the T may rest on bolts positioned either side of the manifold outlet, with the trunk of the T extending downwardly over the outlet. This simplifies the placing and holding of the blanking plate.

Where the unit's manifold is removable, a gasket is preferably provided around the or each manifold outlet and care needs to be taken not to damage this gasket during insertion of a blanking plate. This will not usually be a problem, but preferably, the gasket is removably mounted between the manifold outlet and exchanger inlet so that it may be easily replaced, should it become damaged or worn. For example, the gasket could be mounted on bolts either side of the manifold outlet, such as those on which a T-shaped blanking plate might hang.

In a preferred embodiment for pressure cleaning of the unit, the unit is provided with an inlet for feeding cleaning fluid into the exhaust gas sections of the exchanger and an outlet (which may correspond to the drain means used when soaking the unit) to remove the fluid. The unit may also be supplied with means, such as a blanking plate or valve, for closing off the exhaust gas outlet of the exchanger. This then allows the exchanger to be cleaned under pressure by applying a source of pressurised cleaning fluid to the inlet and draining it through the outlet, which may be valved to allow a desired pressure to build up in the exchanger by restricting the outlet size. The fluid passing through the outlet may be held in a reservoir and recirculated by pump means to the inlet, so that a closed cleaning circuit is provided. Suitable filters, etc, for cleaning the fluid may be provided in the closed circuit embodiment.

In one method of operating this embodiment, the exchanger is first closed off from the exhaust manifold, and filled with cleaning fluid through its exhaust gas outlet. The exhaust gas outlet is then closed off, cleaning fluid under pressure fed into the exchanger through the fluid inlet, and the fluid outlet opened to a suitable degree. The fluid is recirculated by the pump means, and the system left to run for a desired time, as required or necessary, such as 6 hours, after which time the pump means is stopped, and the exchanger is drained. The exchanger may then be flushed through with water, again under pressure, and switched back to normal use.

In one preferred form, the cleaning fluid inlet is also provided with a gauge for measuring the pressure in the exhaust gas sections of the exchanger during normal use. This may then act as an indicator to determine when cleaning should be undertaken.

In a further preferred embodiment, one or more inspection plates are provided on the exchanger to allow access to the inside of the exchanger. These plates may be water-jacketed, so as not to reduce the cooling of the gas during normal use.

An inspection plate provides an alternative method of cleaning, in which, after the manifold is closed off from the exchanger, the inspection plate may be opened and a high pressure hose or a brush used to clear away the deposits from within. In one preferred form, the exchange is adapted to require only a single pass of the exhaust gas therealong for the gas temperature to be reduced sufficiently. (Standard heat exchangers normally require the exhaust gas to pass back and forth along the exchanger two or more times before it is cool enough to be vented). By requiring only one pass, the exchanger's water jacket need not extend over the end of the exchanger nearest the gas exit, and this enables a non-water-jacketed inspection plate to be mounted at that end.

A suitable exchanger for use in the invention would comprise a chamber along which the exhaust gas passes, with a number of finned heat transfer pipes being mounted within the chamber through which cooling fluid, such as water, flows.

The invention is, in general, applicable to any internal combustion engine and any heat exchanger arrangement, and the invention further extends to an internal combustion engine/heat exchanger system using an inventive manifold/exchanger unit as discussed above.

Embodiments of the invention will now be described, by way of example only, with reference to the accompanying drawings, in which:
Figure 1 shows an exploded view of a diesel engine/heat exchanger system;
Figure 2 shows, in more detail, the connection between the exhaust gas manifold and the heat exchanger of Figure 1, the heat exchanger being shown schematically only; and
Figure 3 shows a schematic diagram of a high pressure cleaning circuit according to a second embodiment of the invention.

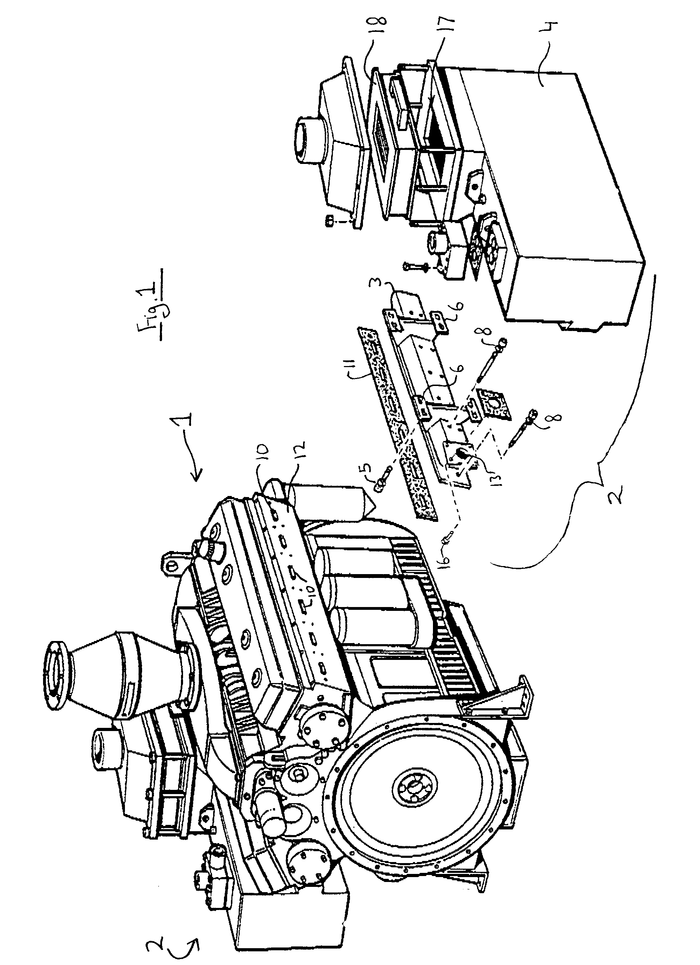

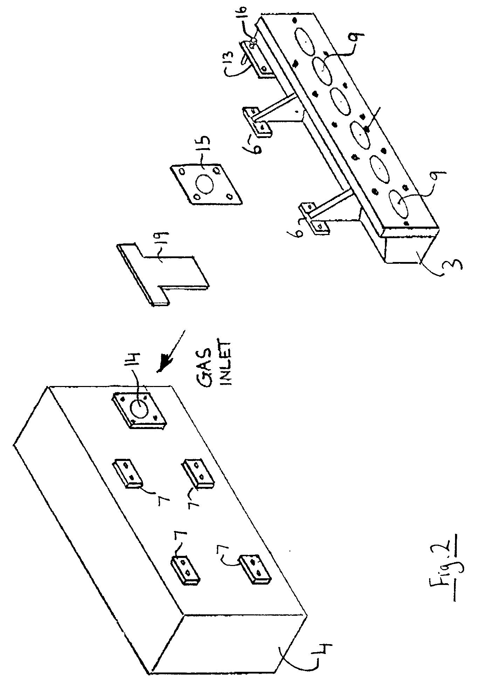

Referring to Figures 1 and 2, there is shown a standard diesel engine 1 to which are attached a pair of water cooled exhaust gas engine manifold/heat exchanger units 2. The right unit 2 is shown in exploded view, and comprises an exhaust gas manifold 3 and a heat exchanger 4 which are connected to one another by bolts, such as bolt 5. The bolts 5 connect brackets 6 with fixing plates 7. The unit 2, as a whole, is bolted to the engine 1 by bolts, such as bolts 8.

The manifold 3 comprises an inlet 9 for each engine exhaust port 10, and a gasket 11 is provided between the manifold 3 and the cylinder head 12 of the engine 1.

The manifold inlets 9 connect to a common passage within the manifold 3, which has a single manifold outlet 13.

Manifold outlet 13 communicates with heat exchanger gas inlet 14, and has a flange gasket 15 removably mounted about it by bolts, such as bolt 16, which also help to hold the manifold 3 to the exchanger 4.

The exhaust gases from the engine pass through the manifold 3 and into the heat exchanger 4 where they are cooled. The gases exit the heat exchanger through gas outlet 17, to which is bolted a flame arrestor 18.

Both the manifold 3 and the exchanger 4 are water cooled, and a water jacket (not shown) is provided about the heat exchanger 4. The cooling system of each unit 2 is connected to the cooling system of the engine 1 in known manner.

When it is desired to clean the heat exchanger, supports or other fixings (not shown) which hold the unit 2 in place are loosened slightly, as are the bolts 5 and 16 holding the manifold 3 to the heat exchanger 4, and the manifold 3 is prised away from the heat exchanger 4, using for example a wedge or a screwdriver, by about 5 mm. A T-shaped blanking plate 19 is then slid into position between the manifold outlet 13 and gas inlet 14, with the arms of the T hanging on the upper two of bolts 16, and all the fixings and bolts are retightened to their correct torque setting. By this, the engine is protected from contamination during the cleaning process. The frame arrestor 18 is then removed, and the exhaust gas sections of the heat exchanger filled with cleaning fluid through the gas outlet 17. The heat exchanger 4 is left to soak for typically 6 to 10 hours, and the fluid is then drained through an outlet valve (not shown) of the heat exchanger 4. The exchanger 4 is then flushed through with water, the T-shaped blanking plate 19 removed (in reverse manner to its insertion), and the engine started and run to clear any fluid residue.

As is clear, this is an extremely efficient method of cleaning the heat exchanger, requiring minimum down-time and labour.

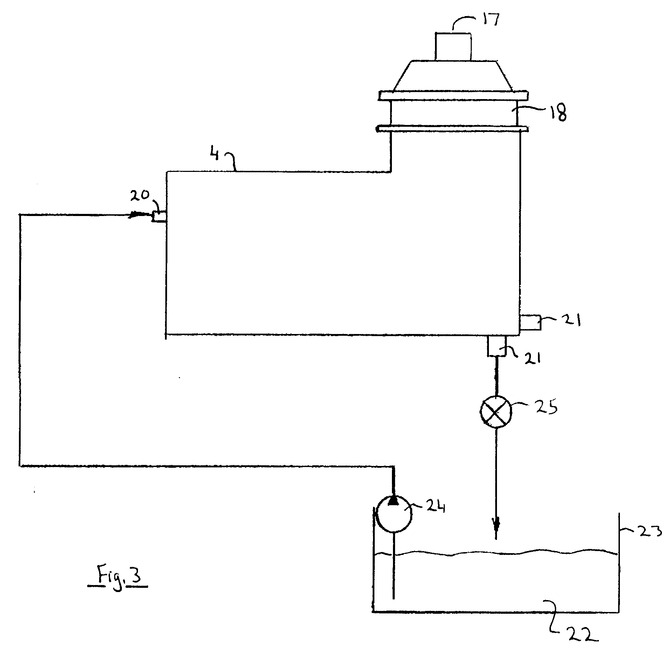

A second embodiment of the invention is shown schematically in Fig. 3, in which the manifold 3 and heat exchanger 4 are identical to those of Fig. 1, except in that the heat exchanger 4 is provided with a cleaning fluid inlet 20 and drain outlets 21 (only one of which is necessary) for allowing pressurised cleaning of the heat exchanger.

Cleaning fluid 22 is pumped from a tank reservoir 23 by any suitable pump 24 through inlet 20 into the exhaust gas sections of the heat exchanger 4, under pressure. One of the outlets 21 is connected via hand valve 25 to the reservoir tank 23 and the other is stopped.

In this embodiment, cleaning is effected, by, as before, inserting the T-shaped blanking plate 19 between the manifold outlet 13 and heat exchanger gas inlet 14. The flame arrestor 18 is then removed, and the exhaust gas sections of the heat exchanger 4 filled with cleaning fluid through the exchanger gas outlet 17. A suitable blanking plate (not shown) is then bolted over the outlet 17, and the pump 24 started so as to apply cleaning fluid 22 through inlet 20 into the exhaust gas sections of the heat exchanger. Hand valve 25 is opened by a set amount to ensure an adequate circulation of fluid and an adequate fluid pressure in the exchanger. The system is left to run for a set time, as required or necessary, such as about 6 hours, before being drained. It is then flushed through with water, refitted to run, and the engine started and run to clear any fluid residue.

Inlet 20 may also be provided with a pressure gauge for determining the pressure in the exhaust gas sections of the heat exchanger during normal use. This can provide an indication of when cleaning is necessary. The fill and soak cleaning method of the first embodiment could of course also be used in this second embodiment, if desired, by stopping the fluid inlet 20 and outlets 21.

In a further embodiment, one or more inspection plates may be provided on the exchanger at any suitable location to allow access to the inside of the exchanger. The plates are preferably water-jacketed, but, if, the exchanger 4 is of a type requiring only a single pass of the exhaust gas through it before the gas is vented, the water jacket normally provided about the whole of the exchanger 4 need not extend across the end of the exchanger nearest the gas outlet 17, and this enables a non-water-jacketed inspection plate to be fitted to this end of the exchanger. The inspection plate or plates allow the exchanger to be cleaned by firstly blocking off the manifold 3 from the exchanger 4 as above, and by then opening the inspection plate or plates and using a hose and brush to clean out the exhaust gas sections of the heat exchanger.

## Claims

1. A method of cleaning an exhaust gas heat exchanger of an internal combustion engine, comprising the steps of closing off the exhaust gas manifold from the exhaust gas heat exchanger, and then cleaning the exchanger, both steps being carried out whilst the manifold and exchanger are mounted on the engine.

2. The method of claim 1, wherein the exchanger is closed off from the exhaust manifold and filled with cleaning fluid through its exhaust gas outlet.

3. The method of claim 2, wherein the exhaust gas outlet is closed off after the exchanger has been filled with cleaning fluid, and the cleaning fluid is then circulated through the exchanger via a fluid inlet and a fluid outlet of the exchanger.

4. The method of claim 1, wherein the manifold is closed off from the exchanger, and an inspection plate in the exchanger is opened to allow access to the inside of the exchanger.

5. The method of any preceding claim, wherein the manifold is closed off from the exchanger by placing a blanking plate between an outlet of the manifold and an inlet of the exchanger.

6. An exhaust gas manifold and heat exchanger unit adapted to be mounted on an internal combustion engine, wherein means are provided for enabling the exhaust manifold and heat exchanger portions of the unit to be closed off from one another whilst the unit is mounted on the engine.

7. An exhaust manifold and heat exchanger unit adapted to be mounted on an internal combustion engine, and suitable for in situ cleaning of the exchanger, in which the manifold and exchanger are movable apart from one another at their interface.

8. The unit of claim 6 or 7, wherein the manifold has a single gas outlet which communicates with a single heat exchanger gas inlet.

9. The unit of any of claims 6 to 8, wherein the unit is adapted to allow the insertion of a blanking plate to close off the exchanger from the manifold.

10. The unit of any of claims 6 to 9, wherein the exchanger is provided with an outlet for removing cleaning fluid from the exchanger.

11. The unit of claim 10, wherein the exchanger is provided with an inlet for feeding cleaning fluid into the exchanger.

12. The unit of claim 11, wherein the cleaning fluid inlet is provided with a gauge for measuring pressure in exhaust gas sections of the exchanger during normal use.

13. The unit of any of claims 6 to 12, wherein the exchanger is provided with an inspection plate.

14. The unit of claim 13, wherein the inspection plate is mounted at the end of the exchanger nearest the exhaust gas outlet, and wherein the exchanger is a single pass exchanger.

15. The unit of claim 13 or 14, wherein the inspection plate is water-jacketed.

16. An internal combustion engine/heat exchanger system incorporating a manifold/heat exchanger unit as claimed in any of claims 6 to 15.
